Europäisches Patentamt

European Patent Office

Office européen des brevets

(11) Veröffentlichungsnummer: **0 510 302 A2**

# EUROPÄISCHE PATENTANMELDUNG

(21) Anmeldenummer: **92101311.6**

(22) Anmeldetag: **28.01.92**

(51) Int. Cl.⁵: **G01K 13/02**

(30) Priorität: **24.04.91 DE 4113294**

(43) Veröffentlichungstag der Anmeldung:
**28.10.92 Patentblatt 92/44**

(84) Benannte Vertragsstaaten:
**DE FR GB IT NL SE**

(71) Anmelder: **Firma Carl Freudenberg
Höhnerweg 2-4
W-6940 Weinheim/Bergstrasse(DE)**

(72) Erfinder: **Sausner, Andreas
Hainbuchenstrasse 14 a
W-6000 Frankfurt/M. 71(DE)**
Erfinder: **Mertens, Klaus
Laudenbacher Weg 1
W-6944 Hemsbach(DE)**

(54) **Temperatursensor.**

(57) Temperatursensor zur Verwendung im Zylinderkopf (1) einer flüssigkeitsgekühlten Verbrennungskraftmaschine, umfassend ein Sensorgehäuse (2) mit Anschlußklemmen (3), die signalleitend mit einem die Temperatur des Kühlmittels (9) erfassenden Kühlmitteltemperatursensor (4) und einem die Temperatur eines Bestandteiles des Zylinderkopfes (1) erfassenden Bauteiltemperatursensor (5) verbunden sind. Der Bauteiltemperatursensor (5) berührt einen Bestandteil des Zylinderkopfes (1) anliegend.

Fig. 1

Die Erfindung betrifft einen Temperatursensor zur Verwendung im Zylinderkopf einer flüssigkeitsgekühlten Verbrennungskraftmaschine, umfassend ein Sensorgehäuse mit einer Anschlußklemme, die signalleitend mit einem die Temperatur des Kühlmittels erfassenden Kühlmitteltemperatursensor verbunden ist.

Ein solcher Temperatursensor ist allgemein bekannt und gelangt, von flüssigem Kühlmittel umströmt, im Kühlkreislauf einer Verbrennungskraftmaschine, meist in Verbindung mit einer elektronischen Motorsteuerungen zur Abstimmung des Kraftstoff/Luftverhältnisses, oder zur Anzeige der Kühlmitteltemperatur, zur Anwendung. Dieser Sensor erfaßt nur ungenau die zur Bereitstellung eines exakten Kraftstoff/Luftgemisches erforderliche Temperatur. Für eine annähernd exakte Motorsteuerung sind vielmehr zusätzliche Hilfsgrößen erforderlich, um die instationären Betriebspunkte einer Verbrennungskraftmaschine zu berücksichtigen. Diese Hilfsgrößen müssen mit großem zeitlichen Aufwand an den jeweiligen Motor angepaßt werden. Wird ausschließlich die Kühlmitteltemperatur durch einen Sensor erfaßt, ist dieser Wert nur zur Steuerung des Kraftstoff/Luftverhältnisses für stationäre Betriebspunkte einer Verbrennungskraftmaschine, also für den Betrieb mit konstanter Motordrehzahl und -Last, eine hinreichend genaue Größe.

Der Erfindung liegt die Aufgabe zugrunde, einen Temperatursensor derart weiterzuentwickeln, daß sich eine exakte Steuerung des Kraftstoff/Luftverhältnisses durch die Motorsteuerung ergibt und die instationären Betriebspunkte der Verbrennungskraftmaschine mit wenig Aufwand einfach erfaßt werden können.

Diese Aufgabe wird erfindungsgemäß mit den kennzeichnenden Merkmalen von Anspruch 1 gelöst. Auf vorteilhafte Ausgestaltung nehmen die Unteransprüche Bezug.

Bei einem Temperatursensor der eingangs genannten Art ist vorgesehen, daß im Sensorgehäuse neben dem Kühlmitteltemperatursensor zumindest ein Bauteiltemperatursensor mit einer separaten Anschlußklemme angeordnet ist und daß der Bauteiltemperatursensor einen Bestandteil des Zylinderkopfes anliegend berührt. Hierbei ist von Vorteil, daß die beiden Temperatursensoren einfach in einer Steckmontageeinheit zusammengefaßt sind, wodurch sich ein geringer Montageaufwand ergibt. Neben der Kühlmitteltemperatur kann die Bauteiltemperatur an kritischen Stellen des Zylinderkopfes ermittelt werden und der Motorsteuerung zur Bestimmung und Optimierung des erforderlichen Kraftstoff/Luftgemisches signalleitend zugeführt werden. Durch die exakte Ermittlung der thermischen Verhältnisse der Verbrennungskraftmaschine können der Kraftstoff gut ausgenutzt und die Schadstoffe im Abgas reduziert werden. Vorteilhaft darüber hinaus ist, daß die Möglichkeit besteht, einen direkten Vergleich zwischen der Bauteiltemperatur und dem daran angrenzenden Kühlmittel zu ziehen. Auch die Verlegung der Signalleitungen von den Anschlußklemmen des Sensorgehäuses zur Motorsteuerung ist durch die zusammengefaßte Anordnung von Bauteiltemperatursensor und Kühlmitteltemperatursensor besonders einfach und übersichtlich.

Gemäß einer vorteilhaften Ausgestaltung ist vorgesehen, daß die Anschlußklemmen signalleitend mit einer Regelelektronik verbunden sind. Diese Regelelektronik kann beispielsweise durch die Motorsteuerung einer Verbrennungskraftmaschine gebildet sein. Die Informationen, die der Temperatursensor bezüglich der Kühlmitteltemperatur und/oder der Bauteiltemperatur an die Regelelektronik übermittelt, können als Eingangsgrößen einer Vielzahl von Regelvorgängen dienen. Beispielsweise kann mit Hilfe der Informationen, die der Temperatursensor an die Regelelektronik übermittelt, ein Thermostatventil betätigt werden, das den Kühlmitteldurchsatz durch den Zylinderkopf und die anschließende Verbrennungskraftmaschine regelt.

Das Sensorgehäuse ist zweckmäßigerweise in eine Ausnehmung des Zylinderkopfes einfügbar wobei der Zylinderkopf zumindest im Bereich des vorderen und hinteren Endes von dem Sensorgehäuse dichtend berührt werden kann. Der Bauteiltemperatursensor kann in Fügerichtung an dem vorderen Ende des Sensorgehäuses angeordnet sein und der Kühlmitteltemperatursensor in einer Zwischenzone zwischen dem vorderen und hinteren Ende. Diese Anordnung gewährleistet eine exakte und differenzierte Messung sowohl der Bauteil- als auch der Kühlmitteltemperatur. Der Bauteiltemperatursensor, der in Fügerichtung am vorderen Ende des im wesentlichen rohrförmig gestalteten Sensorgehäuses angeordnet ist, gelangt nicht mit dem im Zylinderkopf befindlichen Kühlmittel in Berührung. Vorteilhaft darüber hinaus ist, daß der Bauteiltemperatursensor so angeordnet ist, daß er vor Ablagerungen und Feuchtigkeit geschützt ist, wodurch eine lange Gebrauchsdauer bei ausgezeichneten Gebrauchseigenschaften bedingt ist. Der Kühlmitteltemperatursensor ist von flüssigem Kühlmittel während des Betriebes der Verbrennungskraftmaschine vollständig umströmt und im Bereich des Strömungskernes des flüssigen Kühlmittels angeordnet.

Die Abdichtung des Sensorgehäuses gegenüber dem Zylinderkopf kann durch zumindest eine O-Ringdichtung bewirkt sein. O-Ringdichtungen ermöglichen eine zuverlässige Abdichtung des vor Flüssigkeit zu schützenden Sensorgehäuse-Hohlraums, sind in nahezu allen Größen und Stärken verfügbar und darüber hinaus besonders wirtschaftlich zu verwendende Bauteile.

Gemäß einer vorteilhaften Ausgestaltung ist es vorgesehen, daß der Bauteiltemperatursensor die Rückseite eines den Brennraum der Verbrennungskraftmaschine begrenzenden Wandungsabschnittes anliegend berührt. Durch den direkten Kontakt zwischen dem Wandungsabschnitt, dessen Oberfläche dem Brennraum abgewandt ist und nicht von flüssigem Kühlmittel berührt wird, ist eine ausgesprochen exakte Ermittlung der Zylinderkopfbauteiltemperatur möglich. Diese exakte Ermittlung der Temperatur des Zylinderkopfes kommt, in Verbindung mit der ermittelten Temperatur des Kühlmittels im Strömungskern durch den Kühlmitteltemperatursensor der exakten Steuerung des Kraftstoff/Luftverhältnisses der Verbrennungskraftmaschine zugute.

Um eine einwandfreie Berührung zwischen Bauteiltemperatursensor und Wandungsabschnitt des Zylinderkopfes zu gewährleisten, kann der Bauteiltemperatursensor durch eine Druckfeder an den Wandungsabschnitt angedrückt sein. Darüber hinaus ist von Vorteil, daß Fertigungstoleranzen im Bereich der Oberfläche des Zylinderkopfes keinen Einfluß auf die Ermittlung der genauen Bauteiltemperatur haben.

Gemäß einer weiteren vorteilhaften Ausgestaltung ist vorgesehen, daß der Bauteiltemperatursensor durch ein Federelement aus elastomerem Werkstoff an den Wandungsabschnitt angedrückt werden kann und daß das Federelement den Bauteiltemperatursensor und das Sensorgehäuse jeweils dichtend berührt. Der Bauteiltemperatursensor kann dazu beispielsweise von dem Federelement aus elastomerem Werkstoff allseitig umschlossen sein. Das Federelement kann beispielsweise einerseits auf den Bauteiltemperatursensor und andererseits im Sensorgehäuse einvulkanisiert sein. Dabei ist darauf zu achten, daß der Bauteiltemperatursensor im nichtmontierten Zustand des Sensorgehäuses in axialer Richtung über den vorderen Rand hinaussteht, so daß er im eingebauten Zustand den interessierenden Wandungsabschnitt unter Vorspannung anliegend berührt. Das Federelement erfüllt sowohl die Funktion einer Druckfeder als auch die Funktion einer Abdichtung des Sensorgehäuses gegenüber dem Zylinderkopf.

Der Kühlmitteltemperatursensor kann in einer quer zur Fügerichtung offenen Vertiefung des Sensorgehäuses angeordnet sein. Der Kühlmitteltemperatursensor ist dadurch vor Beschädigungen, beispielsweise während des Einbaus des Sensorgehäuses in die Ausnehmung des Zylinderkopfes, geschützt. Ferner bewirkt diese platzsparende Anordnung der Temperatursensoren sehr kompakte Abmessungen des Sensorgehäuses, wodurch dieses besonders vielseitig verwendbar und in nahezu allen Anwendungsfällen in weitgehend unveränderter Bauform zur Anwendung gelangen kann.

Vorteilhaft darüber hinaus ist, daß die Vertiefung im Sensorgehäuse so angeordnet ist, daß der Kühlmitteltemperatursensor vollständig von flüssigem Kühlmittel umströmbar ist. Zur Ausnutzung dieser Vorteile, insbesondere der einfachen Montage ohne Gefahr der Beschädigung des Kühlmitteltemperatursensors, ist es vorgesehen, daß dieser die Vertiefung nicht nach außen überragt.

Der Kühlmitteltemperatursensor kann durch Stege am Sensorgehäuse befestigt sein und ist während der bestimmungsgemäßen Verwendung vollständig von Kühlmittel umströmbar. Diese Befestigung gewährleistet eine gute Umströmbarkeit des Sensors durch die vergleichsweise kleinflächigen Auflagepunkte der Stege an der Oberfläche des Sensors. Eine Gefahr, daß die Befestigung des Kühlmitteltemperatursensors, beispielsweise bei der Montage, beschädigt werden könnten, besteht durch die ebenfalls in der offenen Vertiefung des Sensorgehäuses angeordneten Befestigungselemente nicht.

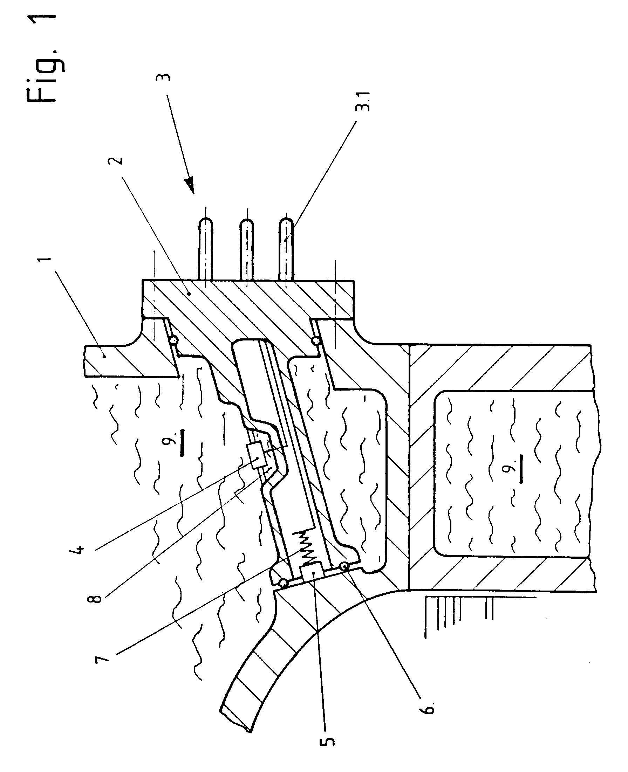

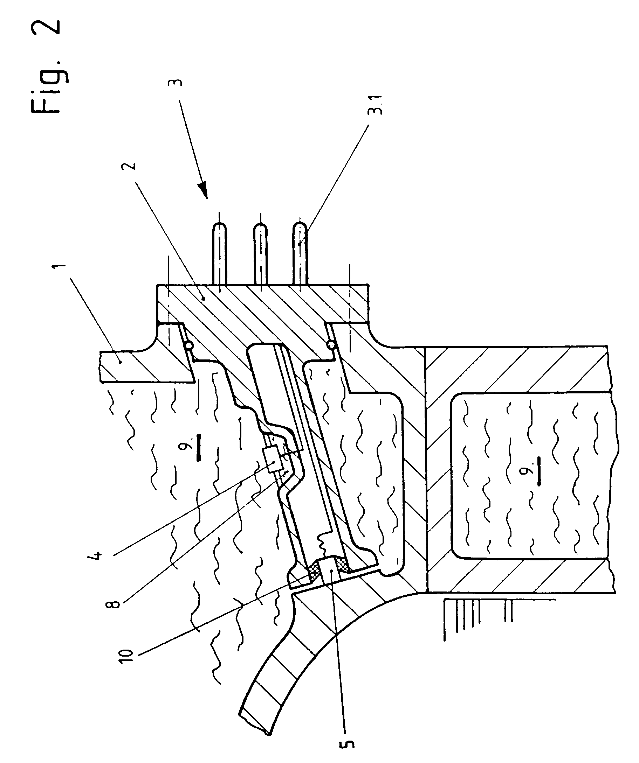

Jeweils ein Ausführungsbeispiel des erfindungsgemäßen Temperatursensors ist in den Figuren 1 und 2 schematisch dargestellt und wird im folgenden näher beschrieben.

In Figur 1 ist ein Sensorgehäuse 2 mit Anschlußklemmen 3 dargestellt, die einerseits signalleitend mit einem die Temperatur des flüssigen Kühlmittels 9 erfassenden Kühlmitteltemperatursensor 4 und einem die Bauteiltemperatur des Zylinderkopfes 1 erfassenden Bauteiltemperatursensors 5 verbunden sind und andererseits mit einer hier nicht dargestellten Regelelektronik, beispielsweise in Form einer Motorsteuerung. Der Bauteiltemperatursensor 5 liegt, durch die Druckfeder 7 federkraftbeaufschlagt, an einem Wandungsabschnitt des Zylinderkopfes 1 an. Das Sensorgehäuse 2 ist in eine Ausnehmung des Zylinderkopfes 1 eingefügt und durch eine Schraubenverbindung an diesem befestigt. Diese Fügeverbindung ist, um einen Flüssigkeitsaustritt des flüssigen Kühlmittels 9 aus dem Kühlkreislauf der Verbrennungskraftmaschine zu verhindern, mit einer Dichtung zur Umgebung hin abgedichtet; in diesem Fall mit einer O-Ringdichtung. Eine weitere O-Ringdichtung 6 schützt den rohrförmigen Hohlraum des Sensorgehäuses 2 vor Flüssigkeitseintritt des Kühlmittels 9, wodurch eine exakte Ermittlung der Bauteiltemperatur des Zylinderkopfes 1 durch den Bauteiltemperatursensor 5 gewährleistet ist. Außerdem ist der Bauteiltemperatursensor 5 vor äußeren, die Gebrauchsdauer reduzierenden und die Gebrauchseigenschaften verschlechternden Einflüssen geschützt. Der Kühlmitteltemperatursensor 4 ist im Bereich des Strömungskerns des Kühlmittels 9 angeordnet.

Der Kühlmitteltemperatursensor 4 ist in einer quer zur Fügerichtung offenen Vertiefung des Sensorgehäuses angeordnet und überragt diese nach außen nicht. Insbesondere während der Montage des Sensorgehäuses in den Zylinderkopf sind Beschädigungen des empfindlichen Kühlmitteltemperatursensors 4 durch die erfindungsgemäße Anordnung weitgehend ausgeschlossen. Der Kühlmitteltemperatursensor 4 wird während der bestimmungsgemäßen Verwendung vollständig von flüssigem Kühlmittel 9 umströmt.

Der Temperatursensor aus Figur 2 unterscheidet sich von dem vorstehend beschriebenen dadurch, daß der Bauteiltemperatursensor 5 durch ein Federelement 10 aus elastomerem Werkstoff an den Wandungsabschnitt angedrückt ist. Das Federelement 10 berührt unter radialer Vorspannung sowohl den Bauteiltemperatursensor 5 als auch die Innenwand des Sensorgehäuses 2. Eine einwandfreie Abdichtung des im Sensorgehäuse 2 befindlichen Hohlraumes gegenüber dem Kühlmantel der Verbrennungskraftmaschine mit dem darin befindlichen flüssigen Kühlmittel 9 ist dadurch gewährleistet. Neben einem teilearmen Aufbau ist an dieser Ausgestaltung von Vorteil, daß die axiale Vorspannung auf den Bauteiltemperatursensor 5 und die Abdichtung gegenüber dem Kühlmittel 9 gute Gebrauchseigenschaften während einer langen Gebrauchsdauer gewährleisten. Auch höherfrequente Motorvibrationen wirken sich nicht nachteilig aus. Außerdem bewirkt das Federelement 10 eine räumliche Festlegung des Bauteiltemperatursensors 5 im Sensorgehäuse 2, was die Montage erheblich vereinfacht.

Insgesamt ergibt sich bei Verwendung des erfindungsgemäßen Temperatursensors eine besonders exakte Anpassung des Kraftstoff/Luftverhältnisses an die jeweiligen instationären Betriebspunkte der Verbrennungskraftmaschine durch die Motorsteuerung, bei einfacher Montage des Temperatursensors im Zylinderkopf und einer guten, wirtschaftlichen Herstellbarkeit des Temperatursensors.

**Patentansprüche**

1. Temperatursensor zur Verwendung im Zylinderkopf einer flüssigkeitsgekühlten Verbrennungskraftmaschine, umfassend ein Sensorgehäuse mit einer Anschlußklemme, die signalleitend mit einem die Temperatur des Kühlmittels erfassenden Kühlmitteltemperatursensor verbunden ist, dadurch gekennzeichnet, daß im Sensorgehäuse (2) neben dem Kühlmitteltemperatursensor (4) zumindest ein Bauteiltemperatursensor (5) mit einer separaten Anschlußklemme (3.1) vorgesehen ist und daß der Bauteiltemperatursensor (5) einen Bestandteil des Zylinderkopfes (1) anliegend berührt.

2. Temperatursensor nach Anspruch 1, dadurch gekennzeichnet, daß die Anschlußklemmen (3, 3.1) signalleitend mit einer Regelelektronik verbunden sind.

3. Temperatursensor nach Ansprüchen 1 bis 2, dadurch gekennzeichnet, daß das Sensorgehäuse (2) in einer Ausnehmung des Zylinderkopfes (1) einfügbar ist, daß der Zylinderkopf (1) zumindest im Bereich des vorderen und hinteren Endes von dem Sensorgehäuse (2) dichtend berührt ist, daß der Bauteiltemperatursensor (5) in Fügerichtung an dem vorderen Ende des Sensorgehäuses (2) angeordnet ist und der Kühlmitteltemperatursensor (4) in einer Zwischenzone zwischen dem vorderen und hinteren Ende.

4. Temperatursensor nach Ansprüchen 1 bis 3, dadurch gekennzeichnet, daß das Sensorgehäuse (2) von im wesentlichen rohrförmiger Gestalt ist.

5. Temperatursensor nach Ansprüchen 3 bis 4, dadurch gekennzeichnet, daß die Abdichtung des Sensorgehäuses (2) gegenüber dem Zylinderkopf (1) durch zumindest eine O-Ringdichtung (6) bewirkt ist.

6. Temperatursensor nach Ansprüchen 1 bis 5, dadurch gekennzeichnet, daß der Bauteiltemperatursensor (5) die Rückseite eines den Brennraum der Verbrennungskraftmaschine begrenzenden Wandungsabschnittes anliegend berührt.

7. Temperatursensor nach Anspruch 6, dadurch gekennzeichnet, daß der Bauteiltemperatursensor (5) durch eine Druckfeder (7) an den Wandungsabschnitt angedrückt ist.

8. Temperatursensor nach Anspruch 6, dadurch gekennzeichnet, daß der Bauteiltemperatursensor (5) durch ein Federelement (10) aus elastomerem Werkstoff an den Wandungsabschnitt angedrückt ist und daß das Federelement (10) den Bauteiltemperatursensor (5) und das Sensorgehäuse (2) jeweils dichtend berührt.

9. Temperatursensor nach Ansprüchen 1 bis 8, dadurch gekennzeichnet, daß der Kühlmitteltemperatursensor (4) in einer quer zur Fügerichtung offenen Vertiefung (8) des Sensorgehäuses (2) angeordnet ist.

10. Temperatursensor nach Anspruch 9, dadurch gekennzeichnet, daß der Kühlmitteltemperatursensor (4) die Vertiefung (8) nicht nach außen überragt.

11. Temperatursensor nach Ansprüchen 1 bis 10, dadurch gekennzeichnet, daß der Kühlmitteltemperatursensor (4) durch Stege am Sensorgehäuse (2) befestigt und während der bestimmungsgemäßen Verwendung vollständig von Kühlmittel (9) umströmbar ist.

# Fig. 1

Fig. 2